# EUROPEAN PATENT SPECIFICATION

(11) **EP 2 690 582 B1**
(45) Date of publication and mention of the grant of the patent: **11.05.2016**
(21) Application number: 12178238.7
(22) Date of filing: 27.07.2012
(51) Int. Cl.: G06K 9/62, G05D 1/02

(54) **System for controlling an automated device**
System zur Steuerung einer automatisierten Vorrichtung
Système pour commander un dispositif automatisé

(43) Date of publication of application: 29.01.2014
(73) Proprietor: Honda Research Institute Europe GmbH, 63073 Offenbach/Main (DE)
(72) Inventor: Wersing, Heiko, 60318 Frankfurt (DE); Queisser, Jeffrey Frederic, 32584 Löhne (DE)
(74) Representative: Rupp, Christian

(56) References cited:
- EP-A1- 2 164 025
- US-B1- 8 214 309
- VLADISLAVS DOGVALECS ET AL: "Time-aware Co-Training for Indoors Localization in Visual Lifelogs", ACM MULTIMEDIA, 28 November 2011 (2011-11-28), pages 1529-1532, XP055053472,
- BO WU ET AL: "Improving Part based Object Detection by Unsupervised, Online Boosting", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1 June 2007 (2007-06-01), pages 1-8, XP031114405, ISBN: 978-1-4244-1179-5
- JAVED O ET AL: "Online Detection and Classification of Moving Objects Using Progressively Improving Detectors", COMPUTER VISION AND PATTERN RECOGNITION, 2005 IEEE COMPUTER SOCIETY CONFERENCE ON, IEEE, PISCATAWAY, NJ, USA, vol. 1, 20 June 2005 (2005-06-20), pages 696-701, XP010817341, DOI: 10.1109/CVPR.2005.259 ISBN: 978-0-7695-2372-9
- PRONOBIS A ET AL: "Confidence-based cue integration for visual place recognition", INTELLIGENT ROBOTS AND SYSTEMS, 2007. IROS 2007. IEEE/RSJ INTERNATIONAL CONFERENCE ON, IEEE, PISCATAWAY, NJ, USA, 1 October 2007 (2007-10-01), pages 2394-2401, XP031188445, DOI: 10.1109/IROS.2007.4399493 ISBN: 978-1-4244-0911-2

## Description

The present invention is directed to a system, a computer program product and a method for controlling an automated device. In particular, the system of the present invention is configured to control the automated device based on output signals from sensors for sensing the environment, and is provided with a computing unit adapted to learn how to control the automated device in case of changing and unexpected environment conditions.

There are a growing number of everyday life consumer devices that perform automated functions for human assistance, or provide autonomous service functionality in a home or an outdoor environment. Examples for fully autonomous devices are robotic lawn mowers and vacuum cleaners. Examples for assistive system devices are driver-assistant systems that either warn the driver of a vehicle, or take over complete driving maneuvers of the vehicle, like automatic breaking or lane keeping.

The operation of such automated devices often depends on a complex sensing of the environment of the device. The sensing result is then interpreted computationally to obtain a meaningful description of the relevant parts of the environment of the automated device, like obstacles or important objects and their respective positions.

A mapping of high-dimensional complex sensory input signals (e.g. input signals from optical sensors like cameras or laser range finders) onto a meaningful symbolic interpretation is a nontrivial problem, wherein learning-based approaches perform best among the current state of the art (see e.g. C. M. Bishop, Pattern Recognition and Machine Learning, Springer (2006)). Learning methods are applied in this domain currently in the form of offline learning. Offline learning is based on firstly collecting a large data set and secondly optimizing the trainable architecture by learning, using a possibly extensive but static data set.

Unfortunately, it is impossible to foresee and train beforehand all possible environment conditions that a mobile robotic or automatic device may encounter during its operation. The capability of a robust incremental adaptation and learning of newly experienced (sensed) environment conditions after the delivery of the device to the customer would offer great advantages for any automated device.

It is generally infeasible to perform a complete incremental learning process that can replace the extensive data set that is used for the offline training of an automated device.

Dovgalecs, V. et al., "Time-aware Co-Training for Indoors Localization in Visual Lifelogs", ACM Multimedia, 28 Nov 2011, p. 1529-1532, addresses the problem of location recognition from visual lifelogs. A co-training approach uses labeled and unlabeled data. A confidence measure is used for incorporating visual features and temporal information into a unified framework. The basic setup is not incremental and online learning but simple batch processing of the data.

Wu, B., "Improving Part based Object Detection by Unsupervised Online Boosting", CVPR '07, IEEE Conference on Computer Vision and Pattern Recognition, 18-23 June 2007, Minneapolis, MN, USA, 1 June 2007, p. 1-8 addresses the problem of object detection and how to learn a general part detector with a high detection rate and a low false alarm rate, in case the labor needed for manually labeling a huge training sample is not affordable. An unsupervised, incremental learning approach based on online boosting and learning a small amount of labeled data with moderate accuracy is proposed. The input data is the same for all learning models: Image pixel data.

Javed, O. et al., "Online Detection and Classification of Moving Objects Using Progressively Improving Detectors", IEEE Conference on Computer Vision and Pattern Recognition, 20 June 2005, Piscataway, NJ, USA, 2005, Vol. 1, p. 696-701 addresses the problem that boosting based detection methods require a large amount of labeled examples for training and cannot adjust to a particular scenario in which they are employed. A co-training based approach is proposed, which includes to continuously label incoming data and use them for online update of a boosted classifier that was initially trained from a small labeled example set.

EP 2 164 025 A1 describes an incremental learning algorithm for optimizing a detection device. The learning algorithm is based on offline samples and online samples in the same feature space.

US 8,214,309 B1 describes a self adapting cognitive-neural technique for image analysis. The method comprises detecting a set of potential items of interest in an image using a cognitive algorithm, refining the set of potential items of interest using a neural analysis, and adapting the cognitive algorithm based on information gained from the results of the neural analysis. The method may further comprise fusing the results of the cognitive and neural algorithms with a fusion classifier.

A typical problem of the abovementioned co-training and incremental semi-supervised learning methods is the difficulty to improve the offline performance on the same sensory input alone that would have been already used during offline training. The basic idea of the present invention is therefore to use context sensors, with which it is possible to specialize an additional incremental learning process to particular situations that occur only in the specific operation environment of the automated device at the user or customer site.

An autonomous robot, in which the confidence level of the classification output determined based on the distance of a test image and the average distance of training vectors is combined with a discriminative accumulation scheme for cue integration, is known from Pronobis, A. et al., "Confidence-based cue integration for visual place recognition", Intelligent Robots and Systems, 2007, IROS 2007, IEEE/RSJ International Conference on, 1 October 2007, pages 2394-2401,

The following non-patent literature shows further prior art approaches for various learning processes, which are discussed in the following.

J.J. Steil et al., Recent trends in online learning for cognitive robotics, Proc. Eur. Symposium Artif. Neural Networks ESANN, Bruges, pp 77-78 (2006).

S. Kirstein et al., A Life-Long Learning Vector Quantization Approach for Interactive Learning of Multiple Categories, Neural Networks 28:90-105 (2012).

S. Kirstein et al., A Biologically Motivated Visual Memory Architecture for Online Learning of Objects, Neural Networks 21:65-77 (2008).

T. Martinetz et al., SoftDoubleMaxMinOver: Perceptron-like Training of Support Vector Machines, IEEE Transactions on Neural Networks 20(7), 1061-1072 (2007).

Schneider P et al., Adaptive relevance matrices in learning vector quantization, Neural Computation 21: 3532 - 3561 (2009).

S. Thrun et al., Probabilistic Robotics, MIT Press (2005).

Incremental and online learning has been discussed as an interesting alternative to pure offline learning approaches, and offers the capability to adapt a mobile robotic system to unexpected and changing environment conditions (see Steil et al. 2006, Kirstein et al. 2008 and 2012).

Fully incremental learning architectures typically start from an empty state and learn based on presented training data. Exemplar-based representations (see Kirstein et al. 2008 and 2012) can be used to avoid the catastrophic forgetting problem, which is caused by the interference of new training data with already learned representations.

Standard learning methods like a support vector machine (SVM) also suffer from this problem (see Martinetz et al. 2009).

US 2003/0050719 describes a similar incremental learning approach, which adapts a single incremental architecture by further sub-differentiating an ensemble of classifiers. The main drawback of such fully incremental architectures is the possibly long initial training phase required for achieving a minimal system function. This long training phase would be prohibitive for a typical consumer robotic system product.

A method for augmenting an existing pre-trained detection system with incremental new training data is described in US 2010/0202681. The document describes a learning and storage unit that is used to collect training data for the case of errors of the pre-trained system. However, all training inputs are treated equally, i.e. there is no concept of a separation according to context inputs. All training modifications are applied directly to the pre-trained system, which is thus only slowly altered with time during the learning process. This makes the architecture sensitive to the above-mentioned interference problem between old and new training data.

Post-delivery learning control devices have been considered for the case of control of heating, ventilation and air conditioning (HVAC). US 2012/0066168 describes a system for predicting the occupancy within an enclosure based on external information, pre-set occupancy models and sensor measurements inside the enclosure.

In combination with a thermodynamic active-learning-based modeling of the enclosure parameters (see WO 2012/037241), this can be used to obtain an automatic HVAC control with improved energy efficiency und user comfort. The usage of an incrementally trained model for optimal HVAC control is described. However, no methods that can be used for obtaining incremental training apart from the general well-known principles of system identification are mentioned.

Map building and SLAM (simultaneous localization and mapping) are typical applications in mobile robotics, where incremental learning is applied to gather information in a spatial environment on objects and structures, and to localize oneself within such a map (see Thrun et al. 2005). The main task of such map building is to build a map that can be used without having to use the actual environment sensing, i.e. store the presence of objects at a particular position, and then statically assume their presence there.

This means that the incremental learning is not applied to actual environment sensing, but only to the association of an environment sensing output to the map. For the case of SLAM the basic task is the simultaneous learning of a map and the localization within the map, based on the input of the environment sensors. As a drawback, map building and SLAM approaches have to make an a priori assumption of a stationary environment or have to use information only from the stationary parts of the environment.

The target of the present invention is to improve the drawbacks of the above mentioned prior art. In particular, the present invention seeks to provide a hybrid learning system that augments a static pre-trained sensor input-output mapping system (referred to as a mapping unit) for controlling an automated device with an incrementally learning online architecture (referred to as a learning unit), in order to adapt to changing and unexpected environment conditions. The adaptation is based on new training data provided in the form of input pairs of various sensor output signals and target control signals, wherein the target control signals are obtained from human interactions or are self-generated by the system.

The present invention assumes that the new training data is available during system operation, and is either obtained by human interaction with the system or is self-generated by using complementary context cues that allow the classification of an experienced input stimulus (e.g. a bumper signal from a sensor can be used for classifying an obstacle).

The main ideas of the learning approach used by the control system and method of the present invention are:
- Providing a sufficient initial system performance by starting from a pre-trained offline mapping unit and an empty incremental learning unit
- Detecting failures of the mapping unit and adding training data to the learning unit based on a state of the system (context state)
- Deciding adaptively to either use the output of the mapping unit or the output of the learning unit based on current sensor and/or context states
- Estimating a context-dependent confidence value for the output of the mapping unit and the learning unit for said decision process
- Enabling an incremental adaptation to arbitrary environment conditions with possibly many deviations from the pre-trained state of the control system/method

In particular, the present invention is directed to a system for controlling an automated device according to the appended claim 1.

The primary sensor signal and the context sensor signal are output signals of the respective sensors. These signals can be output continuously or intermittently. An output signal from a sensor can e.g. correspond to one sensor reading at a certain point in time, wherein multiple signals (readings) can be provided. The output signal of e.g. a primary sensor can contain multiple characteristic values, like pixel intensities of an optical sensor. These characteristic values can be provided as a vector in the signal. The mapping unit uses a pre-set mapping algorithm for performing its mapping function. The learning unit has to make no a priori assumptions on the stationarity of the objects or parameterized structures that are sensed by the primary sensors.

The system of the present invention is configured to learn new control signals for the automated device based on unexpected changes in the environment of the system. The at least one primary sensor and the at least one context sensor provide the system with detailed information about the current environment and operating conditions. Environment conditions are represented in the form of parameters of the context sensor signal, and may encompass general physical information on system location, time of day, date, or any other measurement obtained by the at least one context sensor.

The user input and/or the at least one secondary sensor provide the system with instructions how to behave in such conditions. The present invention therefore achieves a hybrid system for controlling an external automated device that combines a static pre-trained mapping unit and an incremental learning unit for adapting to changing and unexpected environment conditions.

Preferably, at least one context sensor is configured to measure a local position and/or an orientation of the system in respect to a local reference position and/or reference orientation, respectively.

Preferably, at least one context sensor is configured to measure a time of the day and/or a date.

Preferably, at least one primary sensor is a camera, a laser-range finder, an ultrasonic sensor, and/or an optical image sensor.

Preferably, the training unit is configured to compare the first control signal received from the mapping unit to the target control signal received from the target control unit, and to limit its mapping function to cases, in which the first control signal deviates from the target control signal by more than a given threshold.

Thus, the system does not learn about unnecessary situations, in which the pre-set algorithm produces only a small deviation from the target control signal. The system can therefore limit the size of its complete data set, which saves resources. The learning process can also be performed more efficiently.

Preferably, the learning unit is configured to use, in a vector quantization approach, a set of representative vectors for tiling an input space of a plurality of input vectors and for assigning an output vector to be the second control signal by mapping one input vector to one representative vector, wherein the input space is defined by a primary input vector, which contains the primary sensor signal, and a context vector, which contains the context sensor signal.

The system is based on a vector quantization approach, which enables efficient, fast and precise learning.

Preferably, the learning unit is configured to use adaptive metrics as the vector quantization approach.

Preferably, the learning unit is configured to use the vector quantization approach to tile the input space according to a Voronoi tessellation of the representative vectors in respective metrics, and to compute a confidence value for the first control signal received from the mapping unit and for the second control signal based on an average output error for all previous input vectors within a Voronoi tile.

Preferably, the fusion unit is configured to produce the third control signal by choosing among the first control signal and the second control signal the one having a higher confidence value.

Alternatively, the fusion unit is configured to produce the third control signal by weighting the first control signal and the second control signal received from the mapping unit and the learning unit, respectively, according to their respective confidence values.

Preferably, the third control signal is a signal for controlling a device for automatic garden maintenance.

Preferably, the third control signal is a signal for controlling a robotic lawn mower.

Preferably, the third control signal is a signal for controlling an automatic driver assistant system.

The present invention is further directed to a method for controlling an automated device according to the appended claim 14.

The present invention is further directed to a computer program product adapted to implement the above-described method for controlling an automated device when running on a computing device of the automated device. The computer program product can cause the computing device to carry out the above method steps.

The system, computer program product and the method according to the present invention as described above achieve all desired advantages and improvements over the existing prior art. The present invention will be discussed in the following in more detail in reference to the attached drawing.

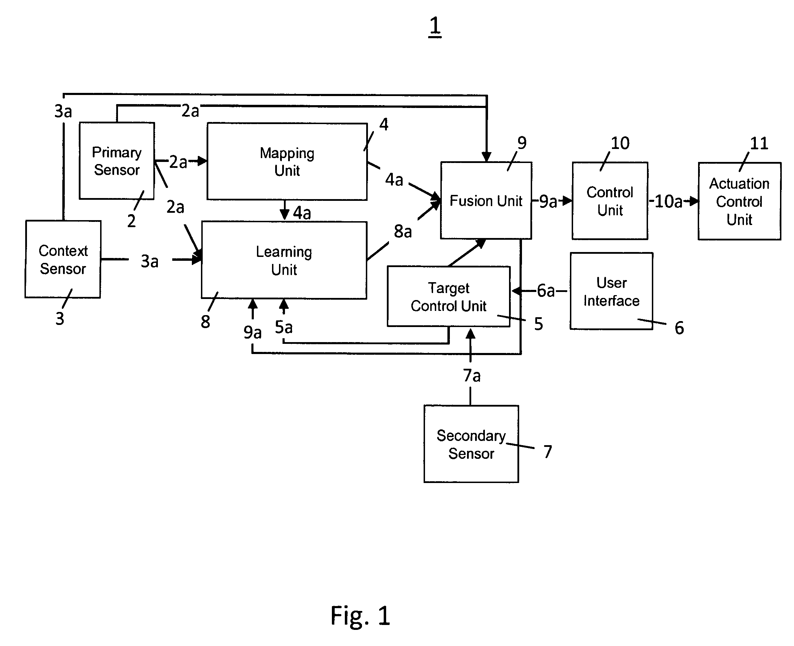

Fig. 1 is a schematic illustration of the system 1 of the present invention.

In Fig. 1 a system 1 for controlling an automated device is shown. In general the system 1 provides an actuation control signal 10a as output to an actuation control unit 11 of an automated device. The system 1 can be built into the automated device, but can also be an external control system. The system 1 maps sensory signals 2a, 3a to the actuated control signal 10a based on an internal state of the system 1, which can be altered by an incremental learning procedure. The generation of the actuation control signal 10a can be based on a classification of the sensory signals 2a, 3a into a meaningful number of categories or a detection of relevant objects within the stimulus and an estimation of their spatial layout.

The basic incremental learning control architecture of the system 1 consists of the components described in the following.

The system includes at least one primary sensor 2. Primary sensors 2a are sensors that are used for sensing the system 1 environment. A primary sensor signal 2a output from the at least one primary sensor 2 serves as main input source for a pre-trained mapping unit 4. A primary sensor 2 can provide either one continuous primary sensor signal 3a, which changes if an event occurs in the environment of the system 1, e.g. an obstacle is detected by the primary sensor 3, or can provide multiple consecutive primary sensor signals 3a, which can correspond to individual readings of the primary sensor 3.

Typical examples for primary sensors 2 are a camera, a laser range finder, an optical image sensor and/or an ultrasonic sensor. Different types of primary sensors 2 can be combined with each other in the system 1. At least one primary sensor 2 of the system 1 delivers a primary sensor signal 2a with information about relevant objects and their spatial configuration in the system 1 environment. Particularly, the signal of the at least one primary sensor 2 contains information that can be computationally extracted in the system 1, in order to obtain parameterized descriptions of the sensed objects and structures and their spatial arrangement dependent on their actual presence at the time of measurement. The at least one primary sensor 2 provides the information to the mapping unit 4 and also to a learning unit 8, which both be described below in more detail.

The system 1 further comprises at least one mapping unit 4. Based on the primary sensor signal 2a as input (or alternatively based on a history of multiple primary sensor signals 2a that correspond to multiple readings of the at least one primary sensor 2), the mapping unit 4 generates a first control signal 4a that could already be used for controlling actuation of the automated device. The first control signal 4a is generated according to a targeted behavior of the automated device that is pre-trained (stored) in the mapping unit 4. Examples for such behaviors are obstacle avoidance, service tasks or interactions with humans. To this end the mapping unit can comprise a memory unit.

The first control signal 4a typically contains an interpretation of the primary sensor signal 2a in terms of information about relevant objects and their spatial configurations or any other parameterized description of the system 1 environment. The mapping unit 4 has been pre-trained by using a large data set that has been collected before delivery of the system 1 to the user, and covers most typical sensor situations that can be expected. By using a large data set, the pre-trained mapping unit 4 can cover most average situations in an optimal way. There are, however, many cases in a general outdoor or indoor environment, where the pre-trained data set provided to the mapping unit 4 may be either insufficient or even wrong.

The mapping unit 4 could also be connected to context sensors 3 (which are described below in more detail) and could then use a data set that includes both the primary sensor and context sensor signals 2a, 3a. It is, however, generally assumed that context signals 3a of context sensors 3 are highly specific to the final usage situation of the system 1. Therefore, a pre-training of the mapping unit 4 also using context sensor signals 3a is of no benefit for optimizing the system 1 performance.

The mapping unit 4 uses a pre-set algorithm for realizing the mapping of the primary sensor signal 2a to the first control signal 4a, which realizes a desired control behavior of the automated device. Therefore, the mapping unit 4 can comprise a processing unit, like e.g. a microprocessor, that can carry out said algorithm. The pre-set algorithm is designed so that it makes no a priori assumption on the stationarity of the objects or parameterized structures in the environment of the system 1. The algorithm does also not deliver a relative or global position of the automated device as the first control signal 4a. It is thus not a localization algorithm, but an algorithm for detecting objects or structures in the environment that are not constrained to be stationary, where stationarity is the basic a priori assumption for localization methods. Known algorithms can be used.

The system further comprises at least one context sensor 3. The at least one context sensor 3 provides a context sensor signal 3a, which is specialized to the actual working environment and situation of the system 1. Examples are e.g. a spatial location within a local reference frame, a time of day and/or a year. The context sensor signal 3a of the at least one context sensor 3 is inputted to the learning unit 8 (described below in more detail). The context sensor 3 allows the learning unit 8 to specialize a mapping from the primary sensor signal 2a to a second control signal 8a according to the current context state.

The information provided in the context sensor signal 3a of the at least one context sensor 3 is unique to the actual system 1 operation conditions, such that there is no a priori knowledge available on the actual sensor reading, which could be used for training the mapping unit 4 to also use the at least one context sensor 3.

The system 1 further includes at least one target control unit 5. The target control unit 5 is capable of obtaining target control signals 5 for a given input state (i.e. given sensor signals 2a, 3a of the at least one primary 2 & context sensor 3) during system 1 usage. The target control signal 5a may be obtained from an interaction with a human supervisor, who provides feedback on an appropriate target control signal 5a in a given situation via a user interface 6 connected to the target control unit. The target control signal 5a may also be self-generated according to an output signal 7a of at least one secondary sensor 7, which delivers complementary information to the target control unit 5 and allows generating the necessary target control signal 5a. A simple example would be the detection by a bump sensor that the automated device bumped into an object, which could serve to label the corresponding primary sensor signal 2a as indicating an obstacle that is to be avoided in the future.

The system 1 further comprises the learning unit 8. The learning unit 8 receives the sensor signals 2a, 3a from the at least one primary sensor 2 and the at least one context sensors 3, respectively, and is trained based on a target control signal 5a received from the target control unit 5, if a target is available. The main purpose of the learning unit 8 is the correction of errors that occur in the pre-trained mapping unit 4 in combination when a particular context sensor 3 state is encountered.

The learning unit 8 employs a method that uses a target control signal 5a for mapping at least one primary sensor signal 2a and one context sensor signal 3a to a second control signal 8a during the operation of the system 1.

The system 1 further comprises a fusion unit 9. The fusion unit 9 receives the control signals 4a, 8a from the pre-trained mapping unit 4 and the incremental learning unit 8, respectively, and also receives the target control signal 5a, if it is available. If no target control signal 5a is available, the fusion unit 9 decides based on a confidence evaluation of the first and second control signal 4a, 8a, respectively, which one of the two to choose, in order to produce a third control signal 9a that is passed to the control unit 10 for generating the actuation control signal 10a for controlling the automated device via its actuation control unit 11. Confidence values can be generated based on a comparison of the first and second control signal 4a, 8a, respectively, to an available target control signal 5a. Alternatively, confidence values can be generated on internal criteria like e.g. their consistency over time. The fusion unit 9 can be equipped to this end with an electrical analog or digital signal comparator and a processing unit, e.g. a microprocessor.

The system 1 further includes a control unit 10. The control unit 10 receives the third control signal 9a output from the fusion unit 9, which is adapted to fuse the first and second control signal 4a, 8a, respectively. The third control signal 9a is used for generating a device specific actuation control signal 10a in the control unit 10, which is for controlling an actuation control unit 11 of the automated device. The control unit 10 can therefore be equipped with a processing unit, like a microprocessor, and a database (memory) storing specific control commands for multiple automated devices in respect to device independent behaviors. The third control signal 9a can be a device independent control signal indicating a behavior, and can be converted by the control unit 10 into a device dependent signal 10a according to the information in the database. Thus, various automated devices can be used with the same control system 1.

The system 1 may also include the actuation control unit 11. Alternatively the actuation control unit 11 belongs to the automated device. The actuation control unit 11 includes all system components on an automated device used for controlling the actions of the automated device, like movement, communication, or any other service. The action of the automated device will be dependent on the third control signal 9a delivered by the fusion unit 9, which delivers a parameterized interpretation of the possibly high-dimensional sensory input, and is converted into the actuation control signal 10a.

A possible realization of the system 1 is described in the following.

During a setup phase the system 1 is pre-trained based on a set of pairs of input vectors Xᵢ and target output vectors Yᵢ, where Xᵢ is a vector comprising the output signal 2a of the at least one primary sensor 2 and Yᵢ denotes a vector comprising the target control unit 5 output signal 5a. The vector components of the vectors contain e.g. multiple data points indicated by the respective signal, i.e. multiple characteristic values. The present invention assumes a mapping model Mₚᵣₑ that is used by the mapping unit 4 and has adaptable parameters, in order to learn how to map from Xᵢ to Yᵢ. The mapping model enables a good generalization to new test data. The mapping model can be any standard machine learning algorithm like e.g. a multi-layer perceptron or support vector machine (see Bishop et al. 2006).

For the task of obstacle avoidance of the automated device the at least one primary sensor 2 can for instance be a camera. Then Xᵢ is the array of pixel intensities for one particular image i. Based on the computational interpretation of the image Xᵢ the mapping unit 4 generates an output Yᵢ= Mₚᵣₑ(Xᵢ), where Yᵢ=1 corresponds to a detected obstacle in the image i and Yᵢ=0 corresponds to no detected obstacle. Based on this output the system 1 can cause the automated device to switch between a "moving forward" and "turn left or right" behavior. During setup a large number of obstacles can be presented, and thus a large training data set is used for pre-training the mapping model Mₚᵣₑ. For a driver assistant system the two alternative actions for detecting an obstacle could be "no warning" and "produce a warning".

After delivery of the automated device with the system 1 to the user/customer, the system 1 initially uses the pre-trained mapping model Mₚᵣₑ for behavior control (e.g. obstacle avoidance). The system 1 is, however, further capable of incrementally learning new behavior control realized with the learning unit 8, whenever a new (unknown by the mapping unit 4) vector pair and a target control signal Yⱼ is available, wherein the vector pair consists of a vector Xⱼ comprising the primary sensor signal 2a and a vector Cⱼ comprising the context sensor signal 3a.

For the example of a mobile robot, a new control signal for a new vector pair can be learned by remembering the input vector Xᵢ of the image i that was encountered shortly before bumping into an obstacle, which was registered by a bumper sensor 7. The present invention assumes an incremental learning vector quantization (iLVQ, see Kirstein et al. 2008) architecture for a mapping model M_{inc} used by the learning unit 8, which learns based on a new input vector. The complete input vector of the model is the concatenation of (Xⱼ, Cⱼ) and the output is the vector Yⱼ comprising a given target control signal. The iLVQ learning model performs incremental learning, based on an incrementally presented data set of new input vectors. The classification is based on a set of representative vectors Wₖ, where each Wₖ has one associated output vector Yₖ. The output of the model M_{inc} for a new input vector (Xₘ , Cₘ) is obtained by first finding the closest prototype vector W_{d} having a minimal distance to the vector (Xₘ, Cₘ) (the distance can e.g. be Euclidean or any other metrics) and then assigning the corresponding output vector Y_{d} of W_{d}, i.e. M_{inc}(Xₘ, Cₘ)=Y_{d}. Incremental learning using the iLVQ approach is error-driven: Based on the supervised vector Yⱼ it is possible to compare the actual output M_{inc}(Xⱼ, Cⱼ) with the target control signal 5a and count the number of errors.

If the number of errors exceeds a threshold, then a new representative vector Wₖ is added. Additionally the weight vectors of the closest correct representative W_{d} and the closest wrong representative W_{d} are updated according to the LVQ learning rule (see Kirstein et al. 2008). Correctness is defined by defining the maximal allowed deviation between the vector Yⱼ and the associated output vector Y_{d} of a representative W_{d}. For a classification scenario (i.e. a binary class vector) the allowed deviation may equal zero (perfect match), for a more general target vector an appropriate threshold can be chosen.

It is possible to use all available training vector pairs for the training of M_{inc}. It can be, however, more efficient to use only those vector pairs, where the pre-trained model Mₚᵣₑ output, i.e. the first control signal 4a output from the mapping unit 4, deviates from the desired target control signal 5a in a defined pattern (e.g. distance between Yⱼ and Mₚᵣₑ (Xⱼ, Cⱼ) greater than a threshold).

During operation and incremental learning the system 1 has two alternative outputs from Mₚᵣₑ and M_{inc} available for controlling the actuation control unit 11, namely the first control signal 4a and the second control signal 8a. The fusion unit 9 has to decide on a fusion or selection of the two signals 4a, 8a. For an incremental learning unit 8a that is exemplar-based like the iLVQ model or any other learning vector quantization approach with metric adaptation (Schneider et al. 2009), there is a simple way of estimating confidence values for the two units 4a, 8a using the systems Mₚᵣₑ and M_{inc}. The input space of all (Xⱼ, Cⱼ) is partitioned into the Voronoi cells of the set of exemplar representatives Wₖ. For each new training input vector (Xⱼ Cⱼ) the corresponding Voronoi cell k of the exemplar Wₖ with minimal distance is selected and an error measure Eₖ^{pre} and Eₖ^{inc} is computed by comparing the outputs of Mₚᵣₑ and M_{inc} to the target vector Yⱼ (e.g. using a squared deviation error). The average error is computed for all training vectors that fall into one Voronoi cell k. For a new test vector, for which no target is available, the fusion/selection module first determines the corresponding Voronoi cell k of the test vector, and then chooses among Mₚᵣₑ and M_{inc} the output of the system with lower average error Eₖ within this Voronoi cell. This ensures a good balancing between the advantages of the mapping unit 4 and the learning unit 8.

The system 1 of the present invention can be used in any application situation where the environment variation is large, making it infeasible to cover all possible situations by selecting a large training set for the pre-trained system. This is often the case for robotic control systems acting within an outdoor environment. The great variability of lighting and shadow configurations, depending on the geographic location, poses big problems for training-based systems using e.g. camera-based image processing.

A robotic lawn mower using a camera for obstacle avoidance can use the system 1 to learn new obstacles that are occurring in a specific garden. The supervised signal can be generated by using a bump sensor 7 and remembering the visual configuration that occurred before the bump. Training input can also be generated from a user that provides supervised training data using a user interface 6 and/or some interactive device like a smart phone.

An assistant warning system within a car or motorcycle typically suffers from rare but possibly annoying false alarms. If these false alarms always occur in a particular spatial or temporal context (i.e. a pothole in the road, causing a blurred camera image) the proposed invention could be used to incrementally adapt the system according to the user feedback.

In summary, the present invention uses context information, in order to control an incremental learning process of the system 1 for controlling an automated device even in an unexpected environment. The system 1 is able to correct errors, which are produced by the pre-trained mapping unit 4 that maps an input obtained by primary sensors 2 onto a first control signal 4a for controlling the automated device. The context information obtained by context sensors 3 helps to constrain the learning process to situations, which can be uniquely identified and cannot be covered by the mapping unit 4. The control signal 9a of the combined control signals 4a and 8a of the mapping unit 4 and the learning unit 8, respectively, is computed in a fusion unit 9 by evaluating the confidence values of the two control signals 4a, 8a, and by either choosing one of the two control signals 4a, 8a, or interpolating between the two outputs. The confidence value evaluation can be done by quantizing the input space according to the incremental learning data, and using the quantized regions for evaluating the performance of both the learned and pre-trained unit within each region.

## Claims

1. System (1) for controlling an automated device, comprising
at least one primary sensor (2) for sensing the environment of the system (1), and for providing a primary sensor signal (2a) that contains information about objects and/or structures and their spatial arrangement in the system (1) environment;
at least one context sensor (3) for providing a context sensor signal (3a) that contains information about current operation conditions of the system (1);
a pre-trained mapping unit (4) for mapping the primary sensor signal (2a) received from the at least one primary sensor (3) to a first control signal (4a);
a target control unit (5) for obtaining, during system usage, for a pair of a primary sensor signal (2a) and a context sensor signal (3a), a target control signal (5a) based on user feedback (6a) received via a user interface (6) and/or at least one secondary sensor signal (7a) received from at least one secondary sensor (7) which provides complementary context cues;
an incremental learning unit (8) for adapting the system to arbitrary environment conditions by mapping, whenever the target control signal (5a) and a new pair of the primary sensor signal (2a) and the context sensor signal (3a) is available, the new pair of the primary sensor signal (2a) and the context sensor signal (3a) received from the at least one primary sensor (2) and the at least one context sensor (3), respectively, to a second control signal (8a) based on the target control signal (7a), wherein the second control signal (8a) deviates from the first control signal (4a);
a fusion unit (9a) for combining the first control signal (4a) and the second control signal (8a) received from the mapping unit (4) and the learning unit (8), respectively, to produce a third control signal (9a);
a control unit (10) for controlling the automated device based on the third control signal (9a) received from the fusion unit (9).

2. System (1) according to claim 1, wherein at least one context sensor (3) is configured to measure a local position and/or an orientation of the system (1) in respect to a local reference position and/or reference orientation, respectively.

3. System (1) according to one of the claims 1 or 2, wherein at least one context sensor (3) is configured to measure a time of the day and/or a date.

4. System (1) according to any one of the preceding claims, wherein the at least one primary sensor (2) is a camera, a laser-range finder, an ultrasonic sensor, and/or an optical image sensor.

5. System (1) according to any one of the preceding claims, wherein the training unit (8) is configured
to compare the first control signal (4a) received from the mapping unit (4) to the target control signal (5a) received from the target control unit (5), and
to limit its mapping function to cases, in which the first control signal (4a) deviates from the target control signal (5a) by more than a given threshold.

6. System (1) according to any one of the preceding claims, wherein the learning unit (8) is configured
to use, in a vector quantization approach, a set of representative vectors (W) for tiling an input space of a plurality of input vectors (X, C) and for assigning an output vector (Y) to be the second control signal (8a) by mapping one input vector (X, C) to one representative vector (W),
wherein the input space is defined by a primary input vector (X), which contains the primary sensor signal (2a), and a context vector (C), which contains the context sensor signal (3a).

7. System (1) according to claim 6, wherein the learning unit (8) is configured to use adaptive metrics as the vector quantization approach.

8. System (1) according to one of the claims 6 and 7, wherein the learning unit (8) is configured to
use the vector quantization approach to tile the input space according to a Voronoi tessellation of the representative vectors (W) in respective metrics, and
to compute a confidence value for the first control signal (4a) received from the mapping unit (4) and for the second control signal (8a) based on an average output error for all previous input vectors (X, C) within a Voronoi tile.

9. System (1) according to any one of the preceding claims, wherein the fusion unit (9) is configured to produce the third control signal (9a) by choosing among the first control signal (4a) and the second control signal (8a) the one having a higher confidence value.

10. System (1) according to one of the preceding claims 1 to 8, wherein the fusion unit (9) is configured to produce the third control signal (9a) by weighting the first control signal (4) and the second control signal (8a) received from the mapping unit (4) and the learning unit (8), respectively, according to their respective confidence values.

11. System (1) according to any one of the preceding claims, wherein the third control signal (9a) is a signal for controlling a device for automatic garden maintenance.

12. System (1) according to any one of the preceding claims, wherein the third control signal (9a) is a signal for controlling a robotic lawn mower.

13. System (1) according to any one of the preceding claims, wherein the third control signal (9a) is a signal for controlling an automatic driver assistant system.

14. Method for controlling an automated device, comprising
sensing the environment of the automated device and providing a primary sensor signal (2a) that contains information about objects and/or structures and their spatial arrangement in the environment of the automated device;
providing a context sensor signal (3a) that contains information about current operation conditions of the automated device;
mapping the primary sensor signal (2a) to a first control signal (4a) based on pre-training on a data set;
obtaining, during execution of the method, for a pair of a primary sensor signal (2a) and a context sensor signal (3a) a target control signal (5a) based on user feedback (6a) and/or at least one secondary sensor signal (7a) which provides complementary context cues;
mapping by an innemental learning procedure, for an adaptation to arbitrary environment conditions, whenever the target control signal (5a) and a new pair of the primary sensor signal (2a) and the context sensor signal (3a) is available, the new pair of the primary sensor signal (2a) and the context sensor signal (3a) to a second control signal (8a) based on the target control signal (7a), wherein the second control signal (8a) deviates from the first control signal (4a);
combining the first control signal (4a) and the second control signal (8a) to produce a third control signal (9a);
controlling the automated device based on the third control signal (9a).

15. A computer program product adapted to implement the method of claim 14 when running on a computing device of an automated device.

## Patentansprüche

1. System (1) zum Steuern einer automatisierten Vorrichtung, aufweisend
wenigstens einen Hauptsensor (2) zum Abtasten der Umgebung des Systems (1) und zum Bereitstellen eines Hauptsensorsignals (2a), das Informationen über Gegenstände und/oder Strukturen und ihre räumliche Anordnung in der Systemumgebung enthält;
wenigstens einen Kontextsensor (3) zum Bereitstellen eines Kontextsensorsignals (3a), das Informationen über momentane Betriebszustände des Systems (1) enthält;
eine im Voraus trainierte Abbildungseinheit (4) zum Abbilden des Hauptsensorsignals (2a), das von dem wenigstens einen Hauptsensor (3) empfangen wurde, auf ein erstes Steuersignal (4a);
eine Zielsteuereinheit (5) zum Erlangen eines Zielsteuersignals (5a) während der Systemnutzung für ein Paar von ersten Sensorsignalen (2a) aus einem Hauptsensorsignal (2a) und einem Kontextsensorsignal (3a), wobei das Zielsteuersignal (5a) auf einer Benutzerrückmeldung (6a), die über eine Benutzerschnittstelle (6) erhalten wurde, und/oder wenigstens einem Nebensensorsignal (7a), das von wenigstens einem Nebensensor (7) erhalten wurde, der ergänzende Kontexthinweise bereitstellt, basiert;
eine inkrementelle Lerneinheit (8) zum Anpassen des Systems an beliebige Umweltbedingungen durch Abbilden eines neuen Paars des Hauptsensorsignals (2a) und des Kontextsensorsignals (3a), das von dem wenigstens einem Hauptsensor (2) bzw. dem wenigstens einen Kontextsensor (3) empfangen wurde, auf ein zweites Steuersignal (8a), basierend auf dem Zielsteuersignal (7a), wobei das zweite Steuersignal (8a) von dem ersten Steuersignal (4a) abweicht, immer dann wenn das Zielsteuersignal (5a) und ein neues Paar des Hauptsensorsignals (2a) und des Kontextsensorsignals (3a) verfügbar ist;
eine Verschmelzungseinheit (9a) zum Kombinieren des ersten Steuersignals (4a) und des zweiten Steuersignals (8a), die von der Abbildungseinheit (4) bzw. der Lerneinheit (8) jeweils empfangen wurden, um ein drittes Steuersignal (9a) zu erzeugen;
eine Steuereinheit (10) zum Steuern der automatisierten Vorrichtung, basierend auf dem dritten Steuersignal (9a), das von der Verschmelzungseinheit (9) empfangen wurde.

2. System (1) gemäß Anspruch 1, wobei wenigstens ein Kontextsensor (3) eingerichtet ist, um eine lokale Position und/oder eine Orientierung des Systems (1) in Bezug auf eine entsprechende lokale Referenzposition bzw. Referenzorientierung zu messen.

3. System (1) gemäß einem der Ansprüche 1, oder 2, wobei wenigstens ein Kontextsensor (3) eingerichtet ist, um eine Zeit des Tages und/oder ein Datum zu messen.

4. System (1) gemäß einem der vorangegangenen Ansprüche, wobei der wenigstens eine Hauptsensor (2) eine Kamera, ein Laser-Entfernungsmesser, ein Ultraschallsensor und/oder ein optischer Bildsensor ist.

5. System (1) gemäß einem der vorangegangenen Ansprüche, wobei die Trainingseinheit (8) eingerichtet ist, um
das erste Steuersignal (4a), das von der Abbildungseinheit (4) empfangen wurde, mit dem Zielsteuersignal (5a), das von der Zielsteuereinheit (5) erhalten wurde, zu vergleichen, und
seine Abbildungsfunktion auf solche Fälle zu beschränken, in denen das erste Steuersignal (4a) von dem Zielsteuersignal (5a) um mehr als einen vorgegebenen Grenzwert abweicht.

6. System (1) gemäß einem der vorangegangenen Ansprüche, wobei die Lerneinheit (8) eingerichtet ist, um in einem Vektorquantisierungsansatz, einen Satz von repräsentativen Vektoren (W) zum Neigen eines Eingangsraums einer Mehrzahl von Eingangsvektoren (X, C) und zum Zuordnen eines Ausgangsvektors (Y) zu verwenden, der das zweite Steuersignal (8a) sein soll, durch Abbilden eines Eingangsvektors (X, C) auf einen repräsentativen Vektor (W),
wobei der Eingangsraum durch einen Haupteingangsvektor (X) definiert ist, der das Hauptsensorsignal (2a) enthält, und einen Kontextvektor (C), der das Kontextsensorsignal (3a) enthält.

7. System (1) gemäß Anspruch 6, wobei die Lerneinheit (8) eingerichtet ist, um adaptive Metriken als Vektorquantisierungsansatz zu verwenden.

8. System (1) gemäß einem der Ansprüche 6 und 7, wobei die Lerneinheit (8) eingerichtet ist
den Vektorquantisierungsansatz zu verwenden, um einen Eingangsraum gemäß einem Voronoi-Mosaik der repräsentativen Vektoren (W) in entsprechenden Metriken abzudecken, und
einen Konfidenzwert für das erste Steuersignal (4a), das von der Abbildungseinheit (4) empfangen wurde, und für das zweite Steuersignal (8a), basierend auf einem mittleren Ausgangsfehler für alle vorangegangenen Eingangsvektoren (X, C) innerhalb einer Voronoi-Kachel zu berechnen.

9. System (1) gemäß einem der vorangegangenen Ansprüche, wobei die Verschmelzungseinheit (9) eingerichtet ist, um das dritte Steuersignal (9a) durch Auswählen desjenigen ersten Steuersignals (4a) und zweiten Steuersignals (8a), das einen höheren Konfidenzwert hat zu erzeugen.

10. System (1) gemäß einem der vorangegangenen Ansprüche 1 bis 8, wobei die Verschmelzungseinheit (9) eingerichtet ist, um das dritte Steuersignal (9a) durch Gewichten des ersten Steuersignals (4) und des zweiten Steuersignals (8a), die von der Abbildungseinheit (4) bzw. der Lerneinheit (8) erhalten wurden, gemäß ihren entsprechenden Konfidenzwerten zu erzeugen.

11. System (1) gemäß einem der vorangegangenen Ansprüche, wobei das dritte Steuersignal (9a) ein Signal zum Steuern einer Vorrichtung für automatisierte Gartenpflege ist.

12. System (1) gemäß einem der vorangegangenen Ansprüche, wobei das dritte Steuersignal (9a) ein Signal zum Steuern eines Roboterrasenmähers ist.

13. System (1) gemäß einem der vorangegangenen Ansprüche, wobei das dritte Steuersignal (9a) ein Signal zum Steuern eines automatischen Fahrerassistenzsystems ist.

14. Verfahren zum Steuern einer automatisierten Vorrichtung, aufweisend
Abtasten der Umgebung der automatischen Vorrichtung und Bereitstellen eines Hauptsensorsignals (2a), das Informationen über Gegenstände und/oder Strukturen und ihre räumliche Anordnung in der Umgebung der automatisierten Vorrichtung enthält;
Bereitstellen eines Kontextsensorsignals (3a), das Informationen über momentane Betriebszustände der automatisierten Vorrichtung enthält;
Abbilden des Hauptsensorsignals (2a) auf ein erstes Steuersignal (4a), basierend auf einem Vorabtraining anhand eines Datensatzes;
Erhalten, während der Ausführung des Verfahrens, für ein Paar aus einem Hauptsensorsignal (2a) und einem Kontextsensorsignal (3a) eines Zielsteuersignals (5a), basierend auf einer Benutzerrückmeldung (6a) und/oder wenigstens einem zusätzlichen Sensorsignal (7a), das ergänzende Kontexthinweise bereitstellt;
Abbilden, durch ein inkrementelles Lernverfahren, zum Anpassen an beliebige Umweltbedingen, eines neuen Paars des Hauptsensorsignals (2a) und des Kontextsensorsignals (3a) auf ein zweites Steuersignal (8a), basierend auf dem Zielsteuersignal (7a), wobei das zweite Steuersignal (8a) von dem ersten Steuersignal (4a) abweicht, immer dann, wenn das Zielsteuersignal (5a) und das neue Paar des Hauptsensorsignals und des Kontextsensorsignals (3a) verfügbar ist;
Kombinieren des ersten Steuersignals (4a) und des zweiten Steuersignals (8a), um ein drittes Steuersignal (9a) zu erzeugen;
Steuern der automatisierten Vorrichtung basierend auf dem dritten Steuersignal (9a).

15. Computerprogrammprodukt, das eingerichtet ist, um das Verfahren nach Anspruch 14 auszuführen, wenn es auf einer Rechenvorrichtung der automatisierten Vorrichtung ausgeführt wird.

## Revendications

1. Système (1) pour commander un dispositif automatisé, comprenant
au moins un détecteur principal (2) pour détecter l'environnement du système (1), et pour fournir un signal de détecteur principal (2a) qui contient des informations concernant des objets et / ou des structures et leur agencement spatial dans l'environnement du système (1) ;
au moins un détecteur de contexte (3) pour fournir un signal de détecteur de contexte (3a) qui contient des informations concernant les conditions de fonctionnement actuelles du système (1) ;
une unité cartographique pré-entraînée (4) pour cartographier le signal de détecteur principal (2a) reçu du au moins un détecteur principal (3) à un premier signal de commande (4a) ;
une unité de commande cible (5) pour obtenir, pendant l'usage du système, pour une paire d'un signal de détecteur principal (2a) et d'un signal de détecteur de contexte (3a), un signal de commande cible (5a) basé sur les retours des utilisateurs (6a) reçus par l'intermédiaire d'une interface utilisateur (6) et / ou au moins un signal de détecteur secondaire (7a) reçu de au moins un détecteur secondaire (7) qui fournit des appels de contexte complémentaires ;
une unité d'apprentissage incrémental (8) pour adapter le système aux conditions environnementales arbitraires en cartographiant, chaque fois que le signal de commande cible (5a) et une nouvelle paire du signal de détecteur principal (2a) et du signal de détecteur de contexte (3a) est disponible, la nouvelle paire du signal de détecteur principal (2a) et du signal de détecteur de contexte (3a) reçue du au moins un détecteur principal (2) et du au moins un détecteur de contexte (3), respectivement, à un deuxième signal de commande (8a) basé sur le signal de commande cible (7a), dans lequel le deuxième signal de commande (8a) dévie du premier signal de commande (4a) ;
une unité de fusion (9a) pour combiner le premier signal de commande (4a) et le deuxième signal de commande (8a) reçus de l'unité de cartographie (4) et de l'unité d'apprentissage (8), respectivement, pour produire un troisième signal de commande (9a) ;
une unité de commande (10) pour commander le dispositif automatisé basé sur le troisième signal de commande (9a) reçu de l'unité de fusion (9).

2. Système (1) selon la revendication 1, dans lequel au moins un détecteur de contexte (3) est configuré pour mesurer une position locale et / ou une orientation du système (1) par rapport à une position de référence et / ou une orientation de référence locale, respectivement.

3. Système (1) selon l'une quelconque des revendications 1 ou 2, dans lequel au moins un détecteur de contexte (3) est configuré pour mesurer une heure du jour et / ou une date.

4. Système (1) selon l'une quelconque des revendications précédentes, dans lequel le au moins un détecteur principal (2) est un appareil photo, un télémètre à laser, un détecteur ultrasonique, et / ou un détecteur d'image optique.

5. Système (1) selon l'une quelconque des revendications précédentes, dans lequel l'unité d'entraînement (8) est configurée
pour comparer le premier signal de commande (4a) reçu de l'unité cartographique (4) au signal de commande cible (5a) reçu de l'unité de commande cible (5), et
pour limiter sa fonction cartographique aux cas dans lesquels le premier signal de commande (4a) dévie du signal de commande cible (5a) de plus d'un seuil donné.

6. Système (1) selon l'une quelconque des revendications précédentes, dans lequel l'unité d'apprentissage (8) est configurée
pour utiliser, dans une approche de quantification vectorielle, un ensemble de vecteurs représentatifs (W) pour diviser un espace d'entrée d'une pluralité de vecteurs d'entrée (X, C) et pour attribuer un vecteur de sortie (Y) pour être le deuxième signal de commande (8a) en cartographiant un vecteur d'entrée (X, C) à un vecteur représentatif (W),
dans lequel l'espace d'entrée est défini par un vecteur d'entrée principal (X), qui contient le signal de détecteur principal (2a), et un vecteur de contexte (C), qui contient le signal de détecteur de contexte (3a).

7. Système (1) selon la revendication 6, dans lequel l'unité d'apprentissage (8) est configurée pour utiliser des métriques adaptatives comme approche de quantification vectorielle.

8. Système (1) selon l'une des revendications 6 et 7, dans lequel l'unité d'apprentissage (8) est configurée
pour utiliser l'approche de quantification vectorielle pour diviser l'espace d'entrée selon une tessellation de Voronoï des vecteurs représentatifs (W) dans des métriques respectives, et
pour calculer une valeur de confiance pour le premier signal de commande (4a) reçu de l'unité de cartographie (4) et pour le deuxième signal de commande (8a) basé sur une erreur de sortie moyenne pour tous les vecteurs d'entrée précédents (X, C) à l'intérieur d'un carreau de Voronoï.

9. Système (1) selon l'une quelconque des revendications précédentes, dans lequel l'unité de fusion (9) est configurée pour produire le troisième signal de commande (9a) en choisissant parmi le premier signal de commande (4a) et le deuxième signal de commande (8a) celui qui a la plus grande valeur de confiance.

10. Système (1) selon l'une des revendications 1 à 8, dans lequel l'unité de fusion (9) est configurée pour produire le troisième signal de commande (9a) en pondérant le premier signal de commande (4) et le deuxième signal de commande (8a) reçus de l'unité de cartographie (4) et de l'unité d'apprentissage (8), respectivement, selon leurs valeurs de confiance respectives.

11. Système (1) selon l'une quelconque des revendications précédentes, dans lequel le troisième signal de commande (9a) est un signal pour commander un dispositif pour l'entretien automatique de jardins.

12. Système (1) selon l'une quelconque des revendications précédentes, dans lequel le troisième signal de commande (9a) est un signal pour commander une tondeuse à gazon robotisée.

13. Système (1) selon l'une quelconque des revendications précédentes, dans lequel le troisième signal de commande (9a) est un signal pour commander un système automatique de conduite assistée.

14. Procédé pour commander un dispositif automatisé, comprenant
la détection de l'environnement du dispositif automatisé et la fourniture d'un signal de détecteur principal (2a) qui contient des informations concernant des objets et / ou des structures et leur agencement spatial dans l'environnement du dispositif automatisé ;
la fourniture d'un signal de détecteur de contexte (3a) qui contient des informations concernant les conditions de fonctionnement actuelles du dispositif automatisé ;
la cartographie du signal de détecteur principal (2a) à un premier signal de commande (4a) basé sur un pré-entraînement sur un ensemble de données ;
l'obtention, pendant l'exécution du procédé, pour une paire d'un signal de détecteur principal (2a) et d'un signal de détecteur de contexte (3a) d'un signal de commande cible (5a) basé sur les retours des utilisateurs (6a) et / ou d'au moins un signal de détecteur secondaire (7a) qui fournit des appels de contexte complémentaires ;
la cartographie par une procédure d'apprentissage incrémental, pour une adaptation aux conditions environnementales arbitraires, chaque fois que le signal de commande cible (5a) et une nouvelle paire du signal de détecteur principal (2a) et du signal de détecteur de contexte (3a) est disponible, de la nouvelle paire du signal de détecteur principal (2a) et du signal de détecteur de contexte (3a) à un deuxième signal de commande (8a) basé sur le signal de commande cible (7a), dans lequel le deuxième signal de commande (8a) dévie du premier signal de commande (4a) ;
la combinaison du premier signal de commande (4a) et du deuxième signal de commande (8a) pour produire un troisième signal de commande (9a) ;
la commande du dispositif automatisé basé sur le troisième signal de commande (9a).

15. Produit formant programme informatique adapté pour mettre en oeuvre le procédé de la revendication 14 lorsqu'il fonctionne sur un dispositif informatique d'un dispositif automatisé.
